(19) Europäisches Patentamt
European Patent Office
Office européen des brevets

(11) **EP 0 958 676 B1**

(12) **EUROPÄISCHE PATENTSCHRIFT**

(45) Veröffentlichungstag und Bekanntmachung des Hinweises auf die Patenterteilung:
**16.04.2008   Patentblatt 2008/16**

(51) Int Cl.:
*H04L 9/32* (2006.01)

(21) Anmeldenummer: **98904107.4**

(22) Anmeldetag: **21.01.1998**

(86) Internationale Anmeldenummer:
**PCT/EP1998/000303**

(87) Internationale Veröffentlichungsnummer:
**WO 1998/034373 (06.08.1998 Gazette 1998/31)**

(54) **VERFAHREN ZUM GENERIEREN EINER DIGITALEN SIGNATUR UND VERFAHREN ZUR ÜBERPRÜFUNG DER SIGNATUR**

PROCESS FOR GENERATING A DIGITAL SIGNATURE AND PROCESS FOR CHECKING THE SIGNATURE

PROCEDE POUR GENERER UNE SIGNATURE NUMERIQUE ET PROCEDE DE CONTROLE DE LA SIGNATURE

(84) Benannte Vertragsstaaten:
**AT BE CH DE DK ES FI FR GB GR IE IT LI LU MC NL PT SE**

(30) Priorität: **04.02.1997   DE 19703929**

(43) Veröffentlichungstag der Anmeldung:
**24.11.1999   Patentblatt 1999/47**

(73) Patentinhaber: **Deutsche Telekom AG**
**53113 Bonn (DE)**

(72) Erfinder:
• **SCHWENK, Jörg**
**D-91239 Henfenfeld (DE)**
• **HUBER, Klaus**
**D-64283 Darmstadt (DE)**

(56) Entgegenhaltungen:
**DE-A- 19 513 896**

• **SCHWENK J ET AL: "PUBLIC KEY ENCRYPTION AND SIGNATURE SCHEMES BASED ON POLYNOMIALS OVER N" ADVANCES IN CRYPTOLOGY - EUROCRYPT '96 INTERNATIONAL CONFERENCE ON THE THEORY AND APPLICATION OF CRYPTOGRAPHIC TECHNIQUES, SARAGOSSA, MAY 12 - 16, 1996, 12.Mai 1996, MAURER U (ED ), Seiten 60-71, XP000577413**
• **LIDL R ET AL: "Permutation polynomials in RSA-cryptosystems" ADVANCES IN CRYPTOLOGY. PROCEEDINGS OF CRYPTO 83, SANTA BARBARA, CA, USA, 21-24 AUG. 1983, ISBN 0-306-41637-9, 1984, NEW YORK, NY, USA, PLENUM, USA, Seiten 293-301, XP002066863**

**Beschreibung**

Die Erfindung betrifft ein Verfahren zum Generieren einer digitalen Signatur einer Nachricht gemäß Oberbegriff des Anspruchs 1 und 2 sowie ein Verfahren zur Überprüfung der Signatur.

Diese Verfahren sind als Public-Key-Signaturverfahren aus der Veröffentlichung von Diffie und Hellmann (W. Diffie, M. E. Hellmann, "New directions in cryptography", IEEE Transactions on Information Theory, Vol. IT-22, November 1976, Seiten 644-654) sowie von Rivest, Shamir und Adleman (R. Rivest, A. Shamir und L. Adleman, "A method for obtaining digital signatures and public-key cryptosystems", Communications of the ACM, Vol. 27, Nr. 2, Februar 1978, Seiten 120-126, RSA-Verfahren) bekannt. Sie verwenden zwei Schlüssel, von denen einer zum Signieren einer Nachricht und ein anderer zum Überprüfen dieser Signatur dient. Dabei wird zum Signieren ein geheimer nur dem Absender der Nachricht bekannter Schlüssel eingesetzt, während für die Überprüfung der Signatur ein öffentlicher Schlüssel verwendet wird. Diese Public-Key-Signaturverfahren werden überwiegend bei der Datenkommunikation mittels elektronischer Medien eingesetzt, wobei die Signatur als Ersatz für eine Unterschrift dient. Mittels des öffentlichen Schlüssels ist es für den Empfänger der Nachricht möglich, die Echtheit der Signatur und damit des ihm übermittelten Dokuments zu überprüfen. Anwendungsbeispiele zu den obengenannten Signaturverfahren sind in A. Beutelspacher, "Kryptologie", Vieweg-Verlag 1994 genauer beschrieben worden.

Aus der Patentschrift DE 195 13 896 A1 ist ein Public-Key-Signaturverfahren bekannt, bei dem ein Polynom verwendet wird dessen Koeffizienten aus der zu signierenden Nachricht und einer Zufallszahl gebildet werden. Aus diesem auf diese Weise gebildeten Polynom werden zwei weitere Polynome abgeleitet, die mindestens eine Nullstelle in einem endlichen Körper aufweisen müssen, da diese zur Bildung der Signatur verwendet werden. Ist dies nicht der Fall, muß das beschriebene Verfahren mit einer anderen Zufallszahl wiederholt werden.

Aus der Literaturstelle Schwenk J. et al.: "Public Key Encryption and Signature Schemes Based on Polynomials over Zn advances in Cryptology-Eurocrypt '96 International Conference on the Theory and Application of Cryptographic Techniques, Saragossa, Mai 12-16, 1996, 12. Mai 1996, Maurer U (ed), Seiten 60-71, ist ein Verfahren zum Generieren einer digitalen Signatur einer Nachricht bekannt, wobei dies mittels eines zumindest zwei große Primzahlen umfassenden geheimen Schlüssels erfolgt und die digitale Signatur die Nullstelle eines Polynoms $P(x) - m$ modulo $n$ ist. Als Polynome werden allgemeine Polynome $f(x)$ verwendet. Zwar wird beim Entschlüsseln der digitalen Signatur die Nullstelle aufgefunden, bei allgemeinen Polynomen $f(x)$ hat es sich jedoch herausgestellt, daß diese Nullstelle nicht eindeutig ist, also die digitale Signatur nicht eindeutig erzeugt werden kann.

Aus der Literaturstelle Varadharajan, V.: "Cryptosystem based on Permutation Polynomials" International Journal of Computer Mathematics, 1988, London, Bd. 23, Nr. 3-4, Seiten 235-250, ist es bekannt, Permutationspolynome zum Chiffrieren einer Nachricht zu verwenden. Nachteilig ist, daß jedoch nur die Permutationspolynome verwendet werden können, zu denen eine in der Praxis handhabbare inverse Funktion vorliegt, die für die Entschlüsselung der chiffrierten Nachricht verwendet werden muß.

Der Erfindung liegt daher die Aufgabe zugrunde, ein Signaturverfahren zum Signieren einer Nachricht anzugeben, welches diesen Nachteil nicht aufweist, eine vergleichbare Sicherheit und Ausführungsgeschwindigkeit wie die bisherigen Verfahren aufweist und dabei immer die Generierung einer gültigen Signatur ermöglicht.

Diese Aufgabe wird durch ein Verfahren zum Generieren einer digitalen Signatur mit den Merkmalen des Anspruchs 1 gelöst.

Signaturverfahren, die Polynome über dem Ring der Zahlen modulo einer aus mindestens zwei großen Primzahlen bestehenden Zahl $n$ verwenden, sind bereits aus der Literatur bekannt. Das RSA-Verfahren kann als solches Verfahren aufgefaßt werden. Wichtige Beispiele sind weiterhin die Verfahren, die auf sogenannten Dickson-Polynomen basieren. (W. B. Müller, R. Nöbauer, Cryptanalysis of the Dickson-scheme. Proc. Eurocrypt 85, Lecture Notes in Computer Science, Vol. 219, 1986, Seiten 50-61). Die vorliegende Erfindung geht insoweit über die Arbeiten hinaus, als das Verfahren zur Erzeugung einer Signatur wesentlich allgemeiner ist und es gestattet, auch andere Klassen von Polynomen zu verwenden.

Die Aufgabe der Erfindung wird nach Anspruch 1 nun dadurch gelöst, daß eine Nullstelle $s$ des Polynoms $P(x) - m$ mod $n$ (oder äquivalent dazu, eine Lösung der Gleichung $P(x) = m$ mod $n$) berechnet wird.

$P(x)$ muß dabei ein Permutationspolynom modulo $n$ sein (vergleiche Lidl und Niederreiter, Finite Fields, Encyclopaedia of Mathematics Vol. 20, Cambridge University Press 1983) und $s$ stellt die digitale Signatur der Nachricht $m$ dar.

Eine gültige Signatur $s$ der Nachricht $m$ ergibt sich dadurch, daß ein Produkt $n$ aus den beiden Primzahlen $p$, $q$ gebildet wird und die digitale Signatur $s$ über die Gleichung

$$s = b \bullet u \bullet p + a \bullet v \bullet q \bmod n$$

bestimmt wird und ausgehend von der Gleichung

$$1 = u \bullet p + v \bullet q$$

mittels des erweiterten Euklidischen Algorithmus die Werte u, v und die Werte a, b mittels der Gleichung

$$ggT(P(x)-m, \ x_{-}^{p}-x) \ mod \ p = x-a$$

$$ggT(P(x)-m, \ x^{q}-x) \ mod \ q = x-b$$

berechnet werden und P(x) ein beliebiges Permutationspolynom ist.

Diese Aufgabe wird auch mit einem Verfahren gelöst, das die Merkmale des Anspruchs 2 zeigt. Es ist vorgesehen, daß der geheime Schlüssel durch die Zahl (p-1)(q-1)+1 aus den Primzahlen p und q gebildet wird und daß die digitale Signatur s nach der Gleichung

$$ggT(P(x) \ - \ m,x^{((p-1)(q-1)+1)}-x) \ mod \ n = x-s$$

gebildet wird. Für P(x) werden Permutationspolynome über einem endlichen Körper verwendet. Dadurch ist der größte gemeinsame Teiler, also die Signatur, ein Linearfaktor. Es ist gleichermaßen möglich, statt der oben genannten Zahl (p-1)(q-1)+1 eine hierzu äquivalente Zahl zu verwenden, die sich folgendermaßen berechnet:

$$constante \bullet kgV((p-1),(q-1))+1.$$

Eine Ausgestaltung der erfindungsgemäßen Verfahren besteht darin, daß als Permutationspolynome P(x) verallgemeinerte RSA-Polynome der Form $rx^e + s \ mod \ n$ oder Tschebyscheff-Polynome $T_e(x) \ mod \ n$ oder Dickson-Polynome oder aber eine Kombination aus diesen Polynomen verwendet wird. Tschebyscheff-Polynome werden zum Beispiel in I. Schur, "Arithmetisches über die Tschebyscheffschen Polynome", Gesammelte Abhandlungen, Band III, S. 422-453, Springer-Verlag Berlin Heidelberg New York, 1973 behandelt.

Erfindungsgemäß kann vorgesehen werden, daß die Reihenfolge der Hintereinanderausführung der Tschebyscheff-, verallgemeinerten RSA-, und /oder Dickson-Transformation in Form eines Vektors als Teil des öffentlichen Schlüssels gespeichert wird.

Besonders bevorzugt wird eine Implementierung des Verfahrens, bei dem Permutationspolynome der Form $rx^e + s \ mod \ n$ und $ggT(e,(p^2-1)(q^2-1)) = 1$ mit Dickson-Polynomen verschachtelt werden.

Eine weitere vorteilhafte Ausprägung der Erfindung besteht darin, Permutationspolynome der Form

$$P(x) = p^{-1}(x) \ o \ x^e \ o \ p(x) \ mod \ n$$

zu verwenden, wobei $p^{-1}(x)$ das inverse Polynom zu p(x) ist, $p^{-1}(x)$ und p(x) Permutationspolynome modulo n sind, ggT (e,(p-1)q-1))=1 gilt und das Symbol "o" die Hintereinanderausführung der zugehörigen Funktion symbolisiert, zum Beispiel A(x) o B(x) = A(B(x)).

Weitere vorteilhafte Weiterbildungen der Erfindung ergeben sich aus den übrigen Unteransprüchen.

Das im Anspruch 1 und 2 genannte Public-Key-Signaturverfahren beruht auf dem mathematischen Problem, zwei große Primzahlen zu faktorisieren. Deshalb werden für den geheimen Schlüssel zwei große Primzahlen benutzt und der öffentliche Schlüssel aus dem Produkt dieser beiden Zahlen gebildet.

Für die erfindungsgemäßen Verfahren ist wesentlich, daß neben den beiden Primzahlen Permutationspolynome verwendet werden, die über einem Ring $Z_n$ definiert sind. Ein Permutationspolynom über $Z_n$ ist ein Polynom, das als Funktion betrachtet eine Permutation der Menge {0,1,...,n-1} induziert. Einen Überblick über die Theorie der Permutationspolynome ist in dem Buch von Lidl und Niederreiter "Finite Fields", Encyclopaedia of Mathematics Vol. 20, Cambridge University Press 1983 zu finden.

Für das Public-Key-Signaturverfahren werden also für den geheimen Schlüssel zwei große Primzahlen p und q verwendet. Der öffentliche Schlüssel besteht aus einem Permutationspolynom P(x) und dem Produkt n der Primzahlen p und q.

Soll nun eine Nachricht m von einem Absender signiert werden, so wird zunächst mit Hilfe des Euklidischen Algorithmus der größte gemeinsame Teiler der Polynome p(x) = P (x) - m mod p und xP-x über dem endlichen Körper GF(p) gebildet. Da p(x) ein Permutationspolynom ist, ergibt sich der größte gemeinsame Teiler als Linearfaktor und es gilt

$$\text{ggt(p(x), } x^p-x) = x-a$$

In gleicher Weise wird der größte gemeinsame Teiler der Polynome p(x) = P(x) - m mod q und $x^q$-x über dem endlichen Körper GF(q) gebildet. Auch hier ist p(x) ein Permutationspolynom, sodaß der größte gemeinsame Teiler ein Linearfaktor ist, der folgendermaßen berechnet wird

$$\text{ggt(p(x), } x^q-x) = x-b$$

Über den erweiterten Euklidischen Algorithmus wird die Beziehung 1 = up + vq berechnet, so daß sich mit den ermittelten Werten a und b die Signatur der Nachricht m berechnen läßt mit

$$s = b \bullet u \bullet p + a \bullet v \bullet q$$

Bei der Lösung nach Anspruch 8 wird zur Überprüfung der auf diese Weise gebildeten Signatur beim Empfänger der Nachricht m erfindungsgemäß der öffentliche Schlüssel verwendet, der das Permutationspolynom P(x) und das Produkt n der Primzahlen p, q umfaßt. Dazu wird das Polynom P(x)-m mod n an der Stelle s ausgewertet, so daß falls die Gleichung

$$P(s)-m \text{ mod } n = 0$$

erfüllt ist, die Gültigkeit der Signatur s bestätigt wird.

Nachfolgend wird das erfindungsgemäße Verfahren zur Signatur einer Nachricht und zur Überprüfung dieser Signatur anhand eines Zahlenbeispiels näher erläutert, wobei der Übersichtlichkeit halber die Zahlenwerte sehr klein gewählt wurden. Als geheimer Schlüssel werden die Primzahlen p=1237 und q=5683 gewählt, so daß das Produkt n = p•q = 7029871 ergibt. Der öffentliche Schlüssel ist durch das Polynom P (x) = $2345678x^5$ + 3456789 mod n und das Produkt n gegeben. Es soll die Nachricht m = 1234567 signiert werden. Mit dem Produkt n ergibt sich das Polynom P(x) zu

$$P(x)-m = 2345678x^5 + 2222222$$

Daran anschließend werden die beiden Polynome

$$p(x) = P(x)-m \text{ mod } p = 326x^5 + 570$$

und

$$q(x) = P(x)-m \text{ mod } q = 4282x^5 + 169$$

gebildet. Danach können die größten gemeinsamen Teiler der Polynome p(x) beziehungsweise q(x) mit den Polynomen

$x^p$-x beziehungsweise $x^q$-x berechnet werden:

$$x\text{-}a \;=\; \mathrm{ggT}(326x^5 + 570,\; x^{1237}\text{-}x)\bmod p \;=\; x + 211$$

$$x\text{-}b \;=\; \mathrm{ggT}(4282x^5 + 169,\; x^{5683}\text{-}x)\bmod q \;=\; x + 864$$

Dadurch ergeben sich die Werte für a = 1026 und b = 4819.

Aus dem erweiterten Euklidischen Algorithmus ergibt sich mit der Beziehung 1 = up + vq die Darstellung

$$-2683 \bullet p \;+\; 584 \bullet q \;=\; 1$$

wobei u = -2683 und v = 584 ist (vergleiche E. R. Berkkamp, Algebraic Coding Theory, Aegean Park Press, 1984, S. 21-24).

Mit diesen Werten kann nun die Signatur s berechnet werden:

$$s \;=\; -2683 \bullet p \bullet b + 584 \bullet q \bullet a \bmod n \;=\; 2022284.$$

Ist die zu signierende Nachricht m größer als das Produkt n, so wird die Nachricht in Blöcke aufgespalten die einzeln signiert werden, oder es wird ein sogenannter Hashwert der Nachricht m signiert.

Zur Überprüfung dieser Signatur kann der öffentliche Schlüssel verwendet werden, der aus dem Polynom P(x) und dem Produkt n gebildet wird. Zur Überprüfung der Signatur muß die Gleichung

$$P(s) \;-\; m \bmod n \;=\; 0$$

erfüllt sein. Mit den Zahlenwerten ergibt sich, daß s eine gültige Signatur der Nachricht m ist.

Selbstverständlich ist es auch möglich, mehr als zwei Primzahlen als geheimen Schlüssel zu verwenden, wobei das erläuterte Verfahren dann analog auszuführen ist.

## Patentansprüche

1. Verfahren zum Generieren einer digitalen Signatur s einer Nachricht m mittels eines zumindest zwei große Primzahlen p, q umfassenden geheimen Schlüssels, wobei ein Produkt n aus den Primzahlen p, q gebildet wird und s die Nullstelle eines Polynoms P(x)-m modulo n ist, **dadurch gekennzeichnet, daß** P(x) ein beliebiges Permutationspolynom modulo n ist und daß die Signatur s mit

$$s \;=\; b \bullet u \bullet p \;+\; a \bullet v \bullet q \bmod n$$

erzeugt wird, wobei ausgehend von der Gleichung

$$1 \;=\; u \bullet p \;+\; v \bullet q$$

mittels des erweiterten Euklidischen Algorithmus die Werte u, v und die Werte a, b mittels der Gleichung

$$\mathrm{ggT}(P(x)\text{-}m,\; x^p\text{-}x)\bmod p \;=\; x\text{-}a$$

$$ggT(P(x)-m,\ x^q-x)\ mod\ q\ =\ x-b$$

berechnet werden.

2. Verfahren zum Generieren einer digitalen Signatur s einer Nachricht m mittels eines zumindest zwei große Primzahlen p, q umfassenden geheimen Schlüssels, wobei ein Produkt n aus den Primzahlen p, q gebildet wird und s die Nullstelle eines Polynoms P(x)-m modulo n ist, **dadurch gekennzeichnet, daß** P(x) ein beliebiges Permutationspolynom modulo n ist und daß der geheime Schlüssel die Zahl (p-1) (q-1) + 1 oder eine Zahl ist, die sich aus Konstante•kgV ((p-1),(q-1))+1 ergibt, und daß die digitale Signatur s nach der Gleichung

$$ggT(P(x)-m,\ x^{((p-1)(q-1)+1)}\ -\ x)\ mod\ n\ =\ x\ -\ s$$

berechnet wird.

3. Verfahren nach einem der vorhergehenden Ansprüche, **dadurch gekennzeichnet, daß** als Permutationspolynome Polynome der Form $r \cdot x^e + s$ mod n (verallgemeinerte RSA-Polynome) verwendet werden, wobei r und s Konstanten sind und e der Exponent ist.

4. Verfahren nach einem der vorhergehenden Ansprüche, **dadurch gekennzeichnet, daß** als Permutationspolynome Tschebyscheff-Polynome T(x) mod n verwendet werden.

5. Verfahren nach einem der vorhergehenden Ansprüche, **dadurch gekennzeichnet, daß** als Permutationspolynome Dickson-Polynome verwendet werden.

6. Verfahren nach einem der vorhergehenden Ansprüche, **dadurch gekennzeichnet, daß** als Permutationspolynome beliebige durch Kombinationen der Tschebyscheff-Polynome, der Dickson-Polynome und der Polynome der Form $r \cdot x^e + s$ erhaltene Polynome verwendet werden.

7. Verfahren nach einem der vorhergehenden Ansprüche, **dadurch gekennzeichnet, daß** die Reihenfolge der Hintereinanderausführung der Tschebyscheff-, verallgemeinerten RSA-, und/oder Dickson-Transformationen in Form eines Vektors als Teil des öffentlichen Schlüssels gespeichert werden.

8. Verfahren zur Überprüfung einer digitalen Signatur, die gemäß einem Verfahren nach einem der Ansprüche 1 bis 7 gebildet ist, **dadurch gekennzeichnet, daß** ein öffentlicher Schlüssel zur Überprüfung der digitalen Signatur s das Produkt n und ein beliebiges Permutationspolynom P(x) mod n aufweist und daß die digitale Signatur s einer Nachricht m dann gültig ist, wenn die Gleichung

$$P(s)-m\ mod\ n\ =\ 0$$

erfüllt ist.

**Claims**

1. Method for generating a digital signature s of a message m by means of a secret key including at least two large prime numbers p, q, wherein a product n is formed from the prime numbers p, q, and s is the zero of a polynomial P(x) -m modulo n, **characterized in that** P(x) is any desired permutation polynomial modulo n, and **in that** the signature s is produced using

$$s = b \cdot u \cdot p + a \cdot v \cdot q \ mod \ n,$$

wherein, proceeding from the equation

$$1 = u \cdot p + v \cdot q,$$

the values u, v, and the values a, b are calculated using the extended Euclidean algorithm by means of the equation

$$ggT(P(x) - m, x^p - x) \bmod p = x - a$$

$$ggT(P(x) - m, x^q - x) \bmod q = x - b.$$

2. Method for generating a digital signature s of a message m by means of a secret key including at least two large prime numbers p, q, wherein a product n is formed from the prime numbers p, q, and s is the zero of a polynomial P(x) -m modulo n, **characterized in that** P(x) is any desired permutation polynomial modulo n, and **in that** the secret key is the number (p-1) (q-1) + 1 or a number that results from constant·kgV ((p-1), (q-1))+1, and **in that** the digital signature s is produced using the equation

$$ggT (P(x) - m, x^{((p-1)(q-1)+1)} - x) \bmod n = x - s.$$

3. Method according to any one of the preceding claims, **characterized in that** polynomials of the form $r \cdot x^e + s \bmod n$ (generalized RSA polynomials) are used as permutation polynomials, wherein r and s are constants and e is the exponent.

4. Method according to any one of the preceding claims, **characterized in that** Chebyshev polynomials T(x) mod n are used as permutation polynomials.

5. Method according to any one of the preceding claims, **characterized in that** Dickson polynomials are used as permutation polynomials.

6. Method according to any one of the preceding claims, **characterized in that** arbitrary polynomials obtained by combination of the Chebyshev polynomials, the Dickson polynomials, and the polynomials in the form $r \cdot x^e + s$ are used as permutation polynomials.

7. Method according to any one of the preceding claims, **characterized in that** the sequence of the successive execution of the Chebyshev, generalized RSA, and/or Dickson transformations is stored as part of the public key in the form of a vector.

8. Method for verifying a digital signature produced in accordance with a method from any one of claims 1 through 7, **characterized in that** a public key for verifying the digital signature s contains the product n and an arbitrary permutation polynomial P(x) mod n, and **in that** the digital signature s of a message m is valid when the equation

$$P(s) - m \bmod n = 0$$

is satisfied.

**Revendications**

1. Méthode de génération d'une signature numérique s d'un message m moyennant une clé secrète comprenant au moins deux grands nombres premiers p, q, un produit n étant formé à partir des nombres premiers p, q et s étant la racine d'un polynôme P(x)-m modulo n, **caractérisée en ce que** P(x) est un polynôme quelconque de permutation modulo n et **en ce que** la signature s est générée moyennant

$$s = b{\bullet}u{\bullet}p + a{\bullet}v{\bullet}q \bmod n$$

où les valeurs u, v sont calculées à partir de l'équation

$$1 = u{\bullet}p + v{\bullet}q$$

moyennant l'algorithme d'Euclide étendu et où les valeurs a, b sont calculées moyennant l'équation

$$ggT(P(x)\text{-}m, x^{p}\text{-}x) \bmod p = x\text{-}a$$

$$ggT (P(x) \text{-}m, x^{q}\text{-}x) \bmod q = x\text{-}b.$$

2. Méthode de génération d'une signature numérique s d'un message m moyennant une clé secrète comprenant au moins deux grands nombres premiers p, q, un produit n étant formé à partir des nombres premiers p, q et s étant la racine d'un polynôme P(x)-m modulo n, **caractérisée en ce que** P(x) est un polynôme quelconque de permutation modulo n et **en ce que** la clé secrète est le nombre (p-1) (q-1) + 1 ou un nombre résultant de la constante•kgV ((p-1),(q-1))+1, et **en ce que** la signature numérique s est calculée moyennant l'équation

$$ggT(P(x)\text{-}m, x^{((p\text{-}1)(q\text{-}1)+1)}\text{-}x) \bmod n = x - s.$$

3. Méthode selon l'une quelconque des revendications précédentes, **caractérisée en ce qu'**on utilise comme polynômes de permutation des polynômes de la forme r•x$^e$+s mod n (« polynômes RSA généralisés ») où r et s sont des constantes et où e est l'exposant.

4. Méthode selon l'une quelconque des revendications précédentes, **caractérisée en ce qu'**on utilise comme polynômes de permutation des polynômes de Tchebycheff T(x) mod n.

5. Méthode selon l'une quelconque des revendications précédentes, **caractérisée en ce qu'**on utilise comme polynômes de permutation des polynômes de Dickson.

6. Méthode selon l'une quelconque des revendications précédentes, **caractérisée en ce qu'**on utilise comme polynômes de permutation des polynômes quelconques obtenus en combinant les polynômes de Tchebycheff, de Dickson ainsi que les polynômes de forme r•x$^e$ + s.

7. Méthode selon l'une quelconque des revendications précédentes, **caractérisée en ce que** l'ordre de l'exécution successive des transformations de Tchebycheff, de RSA généralisé et / ou de Dickson est mémorisé sous la forme d'un vecteur comme partie de la clé publique.

8. Méthode de vérification d'une signature numérique obtenue selon une méthode selon l'une des revendications 1 à 7, **caractérisée en ce qu'**une clé publique pour la vérification de la signature numérique s comporte le produit n et un polynôme quelconque de permutation P(x) mod n et **en ce que** la signature numérique s d'un message m n'est valable que si l'équation

$$P(s) - m \bmod n = 0$$

est vérifiée.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19513896 A1

**In der Beschreibung aufgeführte Nicht-Patentliteratur**

- **W. DIFFIE ; M. E. HELLMANN.** New directions in cryptography. *IEEE Transactions on Information Theory,* 22. November 1976, 644-654
- **R. RIVEST ; A. SHAMIR ; L. ADLEMAN.** A method for obtaining digital signatures and public-key cryptosystems. *Communications of the ACM,* Februar 1978, vol. 27 (2), 120-126
- **A. BEUTELSPACHER.** Kryptologie. Vieweg-Verlag, 1994
- **SCHWENK J. et al.** Public Key Encryption and Signature Schemes Based on Polynomials over Zn advances in Cryptology-Eurocrypt '96. *International Conference on the Theory and Application of Cryptographic Techniques, Saragossa,* 12. Mai 1996, 60-71
- **VARADHARAJAN, V.** Cryptosystem based on Permutation Polynomials. *International Journal of Computer Mathematics,* 1988, vol. 23 (3-4), 235-250
- **W. B. MÜLLER ; R. NÖBAUER.** Cryptanalysis of the Dickson-scheme. *Proc. Eurocrypt 85, Lecture Notes in Computer Science,* 1986, vol. 219, 50-61
- Finite Fields. **LIDL ; NIEDERREITER.** Encyclopaedia of Mathematics. Cambridge University Press, 1983, vol. 20
- Arithmetisches über die Tschebyscheffschen Polynome. **I. SCHUR.** Gesammelte Abhandlungen. Springer-Verlag, 1973, vol. III, 422-453
- **E. R. BERKKAMP.** Algebraic Coding Theory. Aegean Park Press, 1984, 21-24